# EUROPÄISCHE PATENTSCHRIFT

(11) **EP 2 805 688 B1**
(45) Veröffentlichungstag und Bekanntmachung des Hinweises auf die Patenterteilung: **05.10.2016**
(21) Anmeldenummer: 13168650.3
(22) Anmeldetag: 22.05.2013
(51) Int. Cl.: A61C 1/14, A61C 1/18, A61C 1/12, F16H 25/16

(54) **Antriebsvorrichtung für ein medizinisches, insbesondere dentales oder chirurgisches, Werkzeug**
Driving device for a medical, in particular dental or surgical tool
Dispositif d'entraînement pour un outil médical, notamment dentaire ou chirurgical

(43) Veröffentlichungstag der Anmeldung: 26.11.2014
(73) Patentinhaber: W & H Dentalwerk Bürmoos GmbH, 5111 Bürmoos (AT)
(72) Erfinder: Rothenwänder, Michael, 5112 Lamprechtshausen (AT); Rehrl, Hermann, 5112 Lamprechtshausen (AT)
(74) Vertreter: Benda, Ralf

(56) Entgegenhaltungen:
- WO-A2-2013/076106
- FR-A- 779 517
- US-A- 3 606 684
- US-A- 4 371 341

## Beschreibung

Die vorliegende Erfindung betrifft eine mechanische Antriebsvorrichtung für ein medizinisches, insbesondere dentales oder chirurgisches, Werkzeug, die ausgebildet ist, das Werkzeug in eine oszillierende Rotationsbewegung zu versetzen. Als oszillierende Rotationsbewegung wird dabei eine Rotationsbewegung verstanden, bei der das Werkzeug abwechselnde in eine erste Drehrichtung um einen ersten Drehwinkel und in eine zweite Drehrichtung, welche der ersten Drehrichtung im Wesentlichen entgegengesetzt ist, um einen zweiten Drehwinkel rotiert, wobei der erste und der zweite Drehwinkel unterschiedliche Beträge aufweisen, so dass das Werkzeug bei mehrfachem, sequentiellen Rotieren in die erste und in die zweite Drehrichtung in Summe eine Rotationsbewegung in eine Vorzugsrichtung erfährt.

Eine derartige mechanische Antriebsvorrichtung ist aus der Patentanmeldung WO 2013 076 106 bekannt. Diese Antriebsvorrichtung umfasst ein Planetenradgetriebe zur Übertragung einer Drehbewegung von einer Antriebswelle auf eine Abtriebswelle und ein Exzentergetriebe, welches eine Pendelbewegung erzeugt und ebenfalls auf die Abtriebswelle überträgt. Durch das Überlagern der Drehbewegung und der Pendelbewegung ist eine oszillierende Rotationsbewegung erzeugbar bzw. ist die Abtriebswelle und ein damit verbundenes Werkzeug in eine derartige oszillierende Rotationsbewegung versetzbar.

US 3 606 684 offenbart ein Getriebe, das eine Rotationsbewegung in eine asymmetrische Oszillationsbewegung umwandelt.

Ziel der vorliegenden Erfindung ist es, eine alternative mechanische Antriebsvorrichtung zu schaffen, die ausgebildet ist, ein medizinisches, insbesondere dentales oder chirurgisches, Werkzeug in eine oszillierende Rotationsbewegung zu versetzen, wobei diese alternative mechanische Antriebsvorrichtung im Vergleich zu der aus dem Stand der Technik bekannten Antriebsvorrichtung vorzugsweise zumindest einen der folgenden Vorteile aufweisen sollen: Sie soll einfacher aufgebaut oder herstellbar sein; sie soll weniger Bauteile aufweisen; sie soll kostengünstiger herstellbar sein; sie soll kleiner sein.

Diese Aufgabe wird gemäß der vorliegenden Erfindung durch eine (mechanische) Antriebsvorrichtung für ein medizinisches, insbesondere dentales oder chirurgisches, Werkzeug, gelöst, die ausgebildet ist, das Werkzeug in eine oszillierende Rotationsbewegung zu versetzen, wobei die oszillierende Rotationsbewegung eine abwechselnde Rotation des Werkzeugs in eine erste Drehrichtung um einen ersten Drehwinkel und in eine zweite Drehrichtung, welche der ersten Drehrichtung im Wesentlichen entgegengesetzt ist, um einen zweiten Drehwinkel umfasst, wobei der erste und der zweite Drehwinkel unterschiedliche Beträge aufweisen, so dass das Werkzeug bei mehrfachem, sequentiellen Rotieren in die erste und in die zweite Drehrichtung in Summe eine Rotationsbewegung in eine Vorzugsrichtung erfährt, wobei die Antriebsvorrichtung umfasst: Eine um eine erste Drehachse rotierende Antriebswelle, die zur Übertragung einer unidirektionalen Rotationsbewegung ausgebildet ist, eine in die oszillierende Rotationsbewegung versetzbare und um eine zweite Drehachse rotierbare Abtriebswelle und ein Exzentergetriebe, das die Antriebswelle und die Abtriebswelle verbindet, wobei das Exzentergetriebe zumindest einen Exzenterstift und zumindest eine Aufnahmeeinheit für den Exzenterstift umfasst, die derart zusammenwirken oder ausgebildet sind, dass die Abtriebswelle und ein mit der Abtriebswelle verbindbares Werkzeug in die oszillierende Rotationsbewegung versetzbar sind.

Wie im Nachfolgenden noch im Detail dargestellt, ist somit nur ein Exzentergetriebe vorgesehen oder benötigt, um die von der Antriebswelle zur Verfügung gestellte unidirektionalen Rotationsbewegung in die oszillierende Rotationsbewegung zu wandeln. Das Exzentergetriebe ist ausgebildet, alleine oder ohne einem weiteren Getriebe die von der Antriebswelle zur Verfügung gestellte unidirektionalen Rotationsbewegung in die oszillierende Rotationsbewegung zu wandeln und diese insbesondere auf die Abtriebswelle zu übertragen. Diese Ausbildung des Exzentergetriebes ist im Vergleich zu der aus dem Stand der Technik bekannten Getriebeeinheit, bei der neben dem nur eine Pendelbewegung erzeugenden Exzentergetriebe ein zweites Getriebe benötigt wird, um die oszillierende Rotationsbewegung zu erzeugen, von erheblichem Vorteil, insbesondere in Bezug auf einen einfachen und platzsparenden Aufbau und eine kostengünstige Herstellung.

Das Exzentergetriebe ist vorzugsweise durch zumindest ein an der Antriebswelle und / oder an der Abtriebswelle vorgesehenes Lager, insbesondere ein Wälzlager oder Kugellager, gelagert. Das Exzentergetriebe ist vorzugsweise aus Metall und / oder Kunststoff gebildet. Das Exzentergetriebe ist vorzugsweise von der ersten Drehachse der Antriebswelle und / oder von der zweiten Drehachse der Abtriebswelle durchsetzt.

Vorzugsweise ist die Aufnahmeeinheit für den Exzenterstift auf einer die erste Drehachse oder die zweite Drehachse umgebenden, im Wesentlichen zylindrischen Oberfläche vorgesehen. Vorzugsweise umfasst die Aufnahmeeinheit zumindest eine Vertiefung, zumindest einen Einstich oder zumindest eine Nut. Besonders bevorzugt weist die Aufnahmeeinheit für den Exzenterstift eine geschlossene (endlose), die erste Drehachse oder die zweite Drehachse umgebende, Bahn oder Führung auf oder die Aufnahmeeinheit bildet eine derartige geschlossene (endlose), die erste Drehachse oder die zweite Drehachse umgebende, Bahn oder Führung. Besonders bevorzugt erstreckt sich die Aufnahmeeinheit, insbesondere die Bahn oder Führung, im Wesentlichen wellenförmig oder geschwungen um die erste Drehachse oder die zweite Drehachse, insbesondere auf der die erste Drehachse oder die zweite Drehachse umgebenden, im Wesentlichen zylindrischen Oberfläche. Vorzugsweise weist die Aufnahmeeinheit zumindest einen Abschnitt oder eine Nut auf, die sich im Wesentlichen axial in Bezug auf die zweite Drehachse der Abtriebswelle erstreckt. Vorzugsweise weist die Aufnahmeeinheit, insbesondere die Nut, die sich im Wesentlichen axial in Bezug auf die zweite Drehachse der Abtriebswelle erstreckt, eine Bodenfläche auf, die zumindest in einem Abschnitt in Richtung der zweiten Drehachse der Abtriebswelle geneigt ist, so dass bevorzugt zumindest in einem Abschnitt die Aufnahmeeinheit oder die Nut eine sich verändernde Tiefe aufweist, insbesondere in Bezug auf eine im Wesentlichen zylindrischen Oberfläche oder Mantelfläche, in der die Aufnahmeeinheit oder die Nut aufgenommen ist.

Gemäß einem Ausführungsbeispiel weist die Aufnahmeeinheit oder Bahn für den Exzenterstift mehrere gewinkelt zueinander angeordnete Abschnitte auf. Vorzugsweise weist die Aufnahmeeinheit mehrere im Wesentlichen Y-förmige Abschnitte auf, die miteinander verbunden sind, insbesondere an den Seitenarmen des Y miteinander verbunden sind. Vorzugsweise sind die Seitenarme des Y etwas versetzt zueinander und / oder in Bezug auf den vertikalen oder dritten Arm des Y angeordnet.

Bevorzugt weist die Aufnahmeeinheit für den Exzenterstift zumindest einen ersten Abschnitt, der derart geformt ist, dass er eine Drehung der Abtriebswelle in die erste Drehrichtung bewirkt, und einen zweiten Abschnitt, der derart geformt ist, dass er eine Drehung der Abtriebswelle in die zweite Drehrichtung bewirkt, auf. Besonders bevorzugt umfasst der erste Abschnitt, der derart geformt ist, dass er eine Drehung der Abtriebswelle in die erste Drehrichtung bewirkt, mehrere geneigt oder gewinkelt zueinander angeordnete Unterabschnitte auf. Vorzugsweise weisen der erste Abschnitt und der zweite Abschnitt unterschiedliche Längen auf. Insbesondere weist jener Abschnitt, der eine Rotationsbewegung der Abtriebswelle in die Vorzugsrichtung bewirkt, eine größere Länge auf als jener Abschnitt, der eine Rotationsbewegung der Abtriebswelle entgegen der Vorzugsrichtung bewirkt. Vorzugsweise ist jener Abschnitt, der eine Rotationsbewegung der Abtriebswelle entgegen der Vorzugsrichtung bewirkt, an einem Ende zumindest eines Seitenarms eines Y-förmigen Abschnitts der Aufnahmeeinheit angeordnet.

Bevorzugt weist die Aufnahmeeinheit für den Exzenterstift, insbesondere die Nut, zumindest einen im Wesentlichen parallel zur zweiten Drehachse der Abtriebswelle angeordneten Abschnitt auf, wobei dieser Abschnitt insbesondere dem im Vorstehenden beschriebenen vertikalen Arm des Y-förmigen Abschnitts der Aufnahmeeinheit entspricht.

Insbesondere erstrecken sich von diesem parallel zur zweiten Drehachse der Abtriebswelle angeordneten Abschnitt ein erster Arm in eine erste Richtung und ein zweiter Arm in eine zweite Richtung, die von der ersten Richtung unterschiedlich ist. Der Winkel zwischen diesen beiden Armen oder den Seitenarmen des Y ist vorzugsweise größer 90°.

Besonders bevorzugt weisen der erste Arm eine erste Kante und der zweite Arm eine zweite Kante auf, wobei die beiden Kanten sich in einem Kontaktpunkt vereinigen, wobei der Kontaktpunkt von einer Mittelachse des parallel zur zweiten Drehachse der Abtriebswelle angeordneten Abschnitts beabstandet oder horizontal verschoben ist oder außerhalb des parallel zur zweiten Drehachse der Abtriebswelle angeordneten Abschnitts angeordnet ist. Durch diese Anordnung des Kontaktpunkts wird die Drehung des Exzenterstifts oder des Exzentergetriebes in eine Vorzugsrichtung definiert oder es wird die Drehung des Exzenterstifts oder des Exzentergetriebes in eine Richtung, insbesondere in eine der Vorzugsrichtung entgegengesetzte Richtung, verhindert oder erschwert. Die beiden Kanten der Arme begrenzen vorzugsweise die Arme, insbesondere definieren die Kanten die obere Grenze der Arme oder Nuten. Insbesondere weisen die beiden Arme jeweils eine weitere Kante auf, welche die untere Grenze der Arme oder Nuten definiert. Vorzugsweise gehen die Unterkanten in den im Wesentlichen parallel zur zweiten Drehachse der Abtriebswelle angeordneten Abschnitt oder in den vertikalen Arm des Y-förmigen Abschnitts der Aufnahmeeinheit über.

Erfindungsgemäß ist das Exzentergetriebe derart ausgebildet, dass der Exzenterstift sich in der Nut oder Führung oder Bahn der Aufnahmeeinheit bewegt, wobei aufgrund der im Vorstehenden beschriebenen Ausgestaltung oder Form der Nut oder Führung oder Bahn die, insbesondere mit der Aufnahmeeinheit direkt oder einteilig verbundene, Abtriebswelle in eine oszillierende Rotationsbewegung versetzbar ist.

Gemäß einem alternativen Ausführungsbeispiel umfasst das Exzentergetriebe einen ersten Exzenterstift, dem eine erste Aufnahmeeinheit zugeordnet ist, und einen zweiten Exzenterstift, dem eine zweite Aufnahmeeinheit zugeordnet ist. Vorzugsweise ist dieses Exzentergetriebe derart ausgebildet, dass ein Exzenterstift und die ihm zugeordnete Aufnahmeeinheit die Abtriebswelle in eine erste Richtung, zum Beispiel in eine Vorzugsrichtung bewegt, und dass der andere Exzenterstift und die ihm zugeordnete Aufnahmeeinheit die Abtriebswelle in eine zweite, der ersten Richtung oder Vorzugsrichtung im Wesentlichen entgegengesetzte Richtung bewegt. Vorzugsweise ist das Exzentergetriebe derart ausgebildet, dass die Drehwinkel, welche die beiden Aufnahmeeinheiten erzeugen, unterschiedliche Beträge aufweisen, so dass in Summe die Abtriebswelle in eine oszillierende Rotationsbewegung versetzbar ist.

Vorzugsweise sind der erste Exzenterstift und der zweite Exzenterstift unterschiedlich weit von der ersten Drehachse der Antriebswelle beabstandet. Vorzugsweise weist die Antriebswelle eine der Abtriebswelle zugewandte Endfläche auf, wobei ein Exzenterstift an oder nahe dem Außenumfang dieser Endfläche angeordnet ist. Vorzugsweise sind die beiden Exzenterstifte auf einer gemeinsamen Geraden vorgesehen, wobei die Gerade im Wesentlichen rechtwinkelig zur ersten Drehachse der Antriebswelle angeordnet ist.

Vorzugsweise sind die erste Aufnahmeeinheit und die zweite Aufnahmeeinheit voneinander beabstandet, insbesondere bezogen auf die zweite Drehachse der Abtriebswelle axial voneinander entfernt. Vorzugsweise sind die erste Aufnahmeeinheit und die zweite Aufnahmeeinheit, zum Beispiel durch einen Einstich, voneinander getrennt.

Vorzugsweise weist die erste Aufnahmeeinheit mehrere erste Nuten und die zweite Aufnahmeeinheit mehrere zweite Nuten auf. Vorzugsweise sind die ersten und / oder zweiten Nuten im Wesentlichen parallel zur zweiten Drehachse der Abtriebswelle angeordnet. Vorzugsweise sind die ersten Nuten und die zweiten Nuten derart versetzt zueinander angeordnet, dass abwechselnd eine erste Nut und eine zweite Nut vorgesehen ist.

Vorzugsweise umgeben die erste Aufnahmeeinheit und die zweite Aufnahmeeinheit die zweite Drehachse der Abtriebswelle im Wesentlichen kreisförmig. Besonders bevorzugt ist / sind die erste Aufnahmeeinheit und / oder die zweite Aufnahmeeinheit als scheiben- oder plattenförmige Elemente ausgebildet, durch deren Mitte sich die Abtriebswelle erstreckt. Besonders bevorzugt ist / sind die erste Aufnahmeeinheit und / oder die zweite Aufnahmeeinheit als scheiben- oder plattenförmige Elemente ausgebildet, an deren Außenumfang oder Außenmantel die ersten und zweiten Nuten vorgesehen sind. Besonders bevorzugt ist zumindest eine Aufnahmeeinheit einteilig mit der Abtriebswelle ausgebildet oder hergestellt.

Vorzugsweise umgeben die ersten Nuten der ersten Aufnahmeeinheit und die zweiten Nuten der zweiten Aufnahmeeinheit die zweite Drehachse und / oder die Abtriebswelle in einer kreisförmigen Anordnung. Vorzugsweise sind die Nuten einer Aufnahmeeinheit gleichmäßig um den Umfang der Aufnahmeeinheit und / oder um die zweite Drehachse der Abtriebswelle angeordnet und / oder gleichmäßig voneinander beabstandet.

Vorzugsweise ist das Exzentergetriebe derart ausgebildet, dass abwechselnd oder nicht gleichzeitig der erste Exzenterstift in die erste Aufnahmeeinheit und der zweite Exzenterstift in die zweite Aufnahmeeinheit eingreift. Alternativ und / oder zusätzlich ist das Exzentergetriebe derart ausgebildet, dass während ein Exzenterstift derart in die ihm zugeordnete Aufnahmeeinheit eingreift, dass er eine Drehung der Abtriebswelle bewirkt, der andere Exzenterstift eine Position einnimmt, in der er keine Drehung der Abtriebswelle bewirkt.

Bevorzugt ist eine medizinische, insbesondere dentale oder chirurgische, Behandlungsvorrichtung, vorzugsweise ein medizinisches, insbesondere dentales oder chirurgisches, Handgriffelement, welche(s) insbesondere für endodontische Behandlungen ausgebildet ist, mit einer Antriebsvorrichtung versehen, die ein Exzentergetriebe aufweist, das ausgebildet ist, insbesondere alleine oder ohne einem weiteren Getriebe, die von der Antriebswelle zur Verfügung gestellte unidirektionalen Rotationsbewegung in eine oszillierende Rotationsbewegung zu wandeln und diese insbesondere auf die Abtriebswelle zu übertragen. Besonders bevorzugt ist die Antriebsvorrichtung derart in der Behandlungsvorrichtung oder in dem Handgriffelement angeordnet, dass die erste Drehachse der Antriebswelle und die zweite Drehachse der Abtriebswelle gewinkelt zueinander angeordnet sind, wobei der Winkel größer 0° ist und insbesondere zwischen 90° und 100° beträgt.

Vorzugsweise umfassen die Behandlungsvorrichtung oder das Handgriffelement einen Kopfabschnitt mit einer Werkzeughaltevorrichtung für das Werkzeug, wobei zumindest ein Teil der Werkzeughaltevorrichtung in der Abtriebswelle angeordnet ist. Besonders bevorzugt schließt an den Kopfabschnitt ein Griffabschnitt an, wobei das Exzentergetriebe zumindest teilweise in dem Kopfabschnitt und / oder in dem Griffabschnitt und / oder in einem Verbindungsbereich des Kopfabschnitts mit dem Griffabschnitt angeordnet ist.

Die Erfindung wird nachfolgend anhand bevorzugter Ausführungsbeispiele und Bezug nehmend auf die beigefügten Zeichnungen erläutert. Es zeigt die
Figur 1 ein erstes Ausführungsbeispiel einer Antriebsvorrichtung oder eines Exzentergetriebes, die / das ausgebildet ist, das Werkzeug in eine oszillierende Rotationsbewegung zu versetzen, wobei zwecks Klarheit die beiden Hauptkomponenten voneinander getrennt sind.
Figur 2 die Antriebsvorrichtung oder das Exzentergetriebe der Figur 1 in zusammengesetztem, betriebsbereitem Zustand.
Figur 3 ein Ausführungsbeispiel einer Aufnahmeeinheit oder Bahn für den Exzenterstift der Antriebsvorrichtung oder des Exzentergetriebes der Figur 1 in einer zweidimensionalen Darstellung.
Figur 4 eine medizinische, insbesondere dentale oder chirurgische, Behandlungsvorrichtung oder ein medizinisches, insbesondere dentales oder chirurgisches, Handgriffelement mit einer Antriebsvorrichtung oder einem Exzentergetriebe der Figur 1.
Figur 5 ein zweites Ausführungsbeispiel einer Antriebsvorrichtung oder eines Exzentergetriebes, die / das ausgebildet ist, das Werkzeug in eine oszillierende Rotationsbewegung zu versetzen, wobei zwecks Klarheit die beiden Hauptkomponenten voneinander getrennt sind.
Figur 6 die Antriebsvorrichtung oder das Exzentergetriebe der Figur 5 in zusammengesetztem, betriebsbereitem Zustand.
Figur 7 eine medizinische, insbesondere dentale oder chirurgische, Behandlungsvorrichtung oder ein medizinisches, insbesondere dentales oder chirurgisches, Handgriffelement mit einer Antriebsvorrichtung oder einem Exzentergetriebe der Figur 5.
Figur 8 zeigt schematisch ein Beispiel einer oszillierenden Rotationsbewegung, wie sie durch eine Antriebsvorrichtung, die eine unidirektionale Rotationsbewegung in eine oszillierende Rotationsbewegung wandelt, erzeugbar ist.

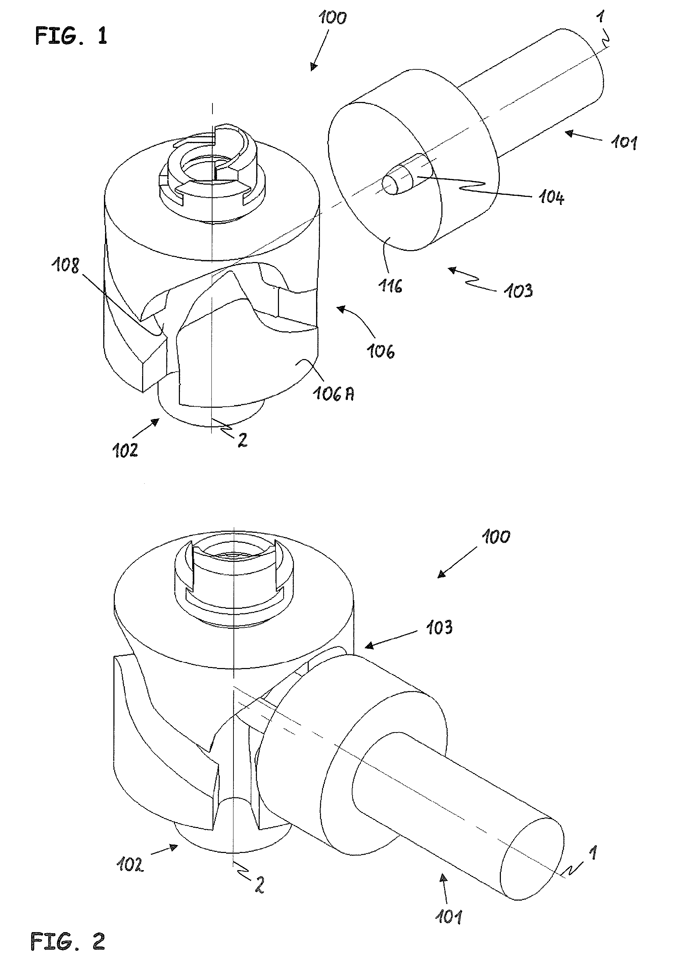

Die in den Figuren 1 - 7 dargestellten Antriebsvorrichtungen 100; 200 für ein medizinisches, insbesondere dentales oder chirurgisches, Werkzeug, sind ausgebildet, ein Werkzeug in eine oszillierende Rotationsbewegung zu versetzen, wobei die oszillierende Rotationsbewegung eine abwechselnde Rotation des Werkzeugs in eine erste Drehrichtung um einen ersten Drehwinkel und in eine zweite Drehrichtung, welche der ersten Drehrichtung im Wesentlichen entgegengesetzt ist, um einen zweiten Drehwinkel umfasst, wobei der erste und der zweite Drehwinkel unterschiedliche Beträge aufweisen, so dass das Werkzeug bei mehrfachem, sequentiellen Rotieren in die erste und in die zweite Drehrichtung in Summe eine Rotationsbewegung in eine Vorzugsrichtung erfährt. Als mit den Antriebsvorrichtungen 100; 200 verbindbare Werkzeuge sind vorzugsweise endodontische Werkzeuge, zum Beispiel Feilen, insbesondere Werkzeuge zum Bearbeiten des Wurzelkanals vorgesehen.

Die Antriebsvorrichtungen 100; 200 umfassen eine um eine erste Drehachse 1 rotierende Antriebswelle 101; 201, die zur Übertragung einer unidirektionalen Rotationsbewegung ausgebildet ist, eine in die oszillierende Rotationsbewegung versetzbare und um eine zweite Drehachse 2 rotierbare Abtriebswelle 102; 202 und ein Exzentergetriebe 103; 203, das die Antriebswelle 101; 201 und die Abtriebswelle 102; 202 verbindet. Die Antriebswelle 101; 201 ist mit einer Antriebseinheit verbindbar oder verbunden, zum Beispiel einem Motor, insbesondere einem Elektromotor. Die Antriebswelle 101; 201 ist vorzugsweise durch ein Lager 115 drehbar gelagert, insbesondere in einer Behandlungsvorrichtung 150; 250 oder einem Handgriffelement 150A; 250A.

Das Exzentergetriebe 103; 203 umfasst zumindest einen Exzenterstift 104; 204, 205 und zumindest eine Aufnahmeeinheit 106; 206, 207 für den Exzenterstift 104; 204, 205, die derart zusammenwirken, dass die Abtriebswelle 102; 202 und ein mit der Abtriebswelle 102; 202 verbindbares Werkzeug in eine oszillierende Rotationsbewegung versetzbar sind.

Der zumindest eine Exzenterstift 104; 204, 205 ist an einer Endfläche 116; 216 der Antriebswelle 101; 201 vorgesehen, wobei die Endfläche 116; 216 insbesondere der Abtriebswelle 102; 202 zugewandt ist. Vorzugsweise ist der zumindest eine Exzenterstift 104; 204, 205 an oder nahe dem Außenrand der Endfläche 116; 216 angeordnet. Vorzugsweise hat die Endfläche 116; 216 einen größeren Außendurchmesser als die Antriebswelle 101; 201.

Die Aufnahmeeinheit 106; 206, 207 und / oder zumindest eine darauf vorgesehene Bahn 108 oder Nut 209, 210 umgeben die Abtriebswelle 102; 202 kreisförmig oder sind im Wesentlichen konzentrisch zur zweiten Drehachse 2 angeordnet. Die Aufnahmeeinheit 106; 206, 207 ist vorzugsweise einteilig mit der Abtriebswelle 102; 202 ausgebildet.

Die Abtriebswelle 102; 202 ist vorzugsweise als Hohlwelle ausgebildet, in der zumindest ein Teil des Werkzeugs und / oder zumindest ein Teil einer Werkzeughaltevorrichtung 152; 252 aufnehmbar oder aufgenommen ist. Die Abtriebswelle 102; 202 und die mit ihr drehfest verbundenen Bauteile, zum Beispiel die Aufnahmeeinheit 106; 206, 207 oder die Werkzeughaltevorrichtung 152; 252, sind mittels zumindest einem Lager beweglich oder drehbar in einem Kopfabschnitt 151; 251 der Behandlungsvorrichtung 150; 250 oder des Handgriffelements 150A; 250A aufgenommen.

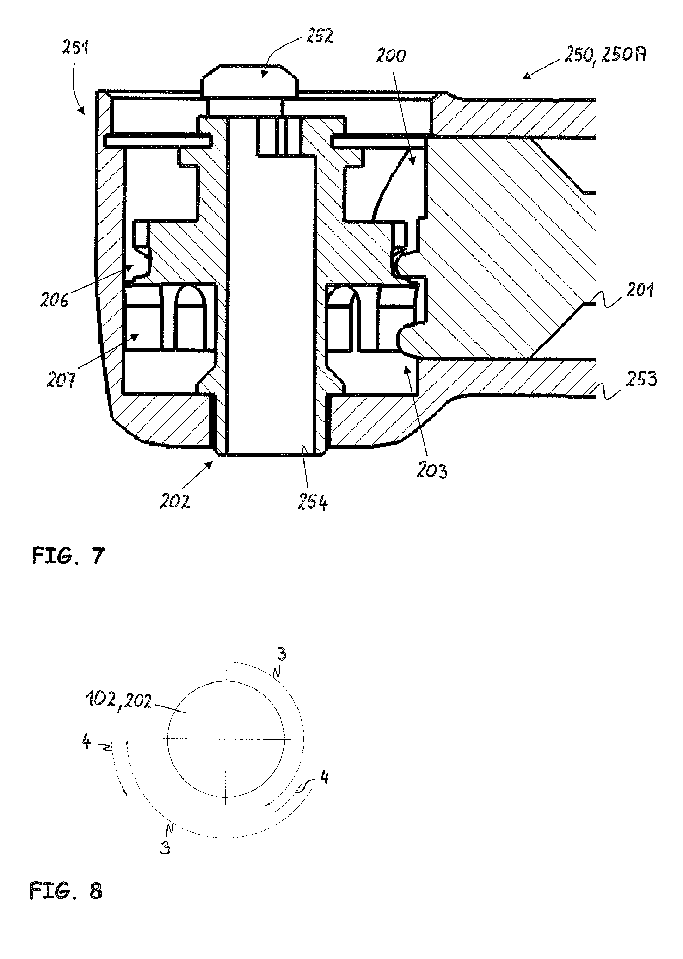

Die von der Antriebsvorrichtung 100; 200 oder dem Exzentergetriebe 103; 203 erzeugte und auf die Abtriebswelle 102; 202 und / oder ein damit verbundenes Werkzeug übertragene oszillierende Rotationsbewegung ist in der Figur 8 dargestellt: Die Abtriebswelle 102; 202 oder das Werkzeug rotieren abwechselnd in eine erste Drehrichtung 3 (zum Beispiel in eine Vorzugs- oder Arbeitsrichtung, in welcher durch das Werkzeug Material, vorzugsweise Gewebe, insbesondere Gewebe eines dentalen Wurzelkanals, abgetragen wird) um einen ersten Drehwinkel und in eine zweite Drehrichtung 4 (entgegen der Vorzugs- oder Arbeitsrichtung, zum Beispiel als Rückstellrichtung benannt, in welcher insbesondere das abgetragene Material von dem Werkzeug weggefördert wird), welche der ersten Drehrichtung 3 im Wesentlichen entgegengesetzt ist, um einen zweiten Drehwinkel, wobei der erste und der zweite Drehwinkel unterschiedliche Beträge aufweisen. Gemäß dem dargestellten Ausführungsbeispiel beträgt zum Beispiel der Drehwinkel der ersten Drehrichtung 3 in etwa 150° und der Drehwinkel der zweiten Drehrichtung 4 in etwa 30°. Klarerweise sind beliebige andere Werte für die Drehwinkel möglich, solange die Drehwinkel unterschiedliche Beträge aufweisen, zum Beispiel in etwa 45° und 20°, 180° und 90°, 270° und 90°, etc. Auch sind die in der Figur 8 dargestellten Drehrichtung nur beispielhaft, es ist daher genauso möglich, die in der Figur 8 dargestellten Drehrichtungen der beiden Drehbewegungen 3, 4 umzukehren, d.h. die Drehrichtung 3 würde dann entgegen dem Uhrzeigersinn und die Drehrichtung 4 im Uhrzeigersinn verlaufen.

Die Frequenz der Oszillationsbewegung der Abtriebswelle 102; 202 oder des Werkzeugs liegt zum Beispiel im Bereich von etwa 3 - 50 Hertz, vorzugsweise im Bereich von etwa 5 - 20 Hertz, insbesondere bei etwa 10 Hertz.

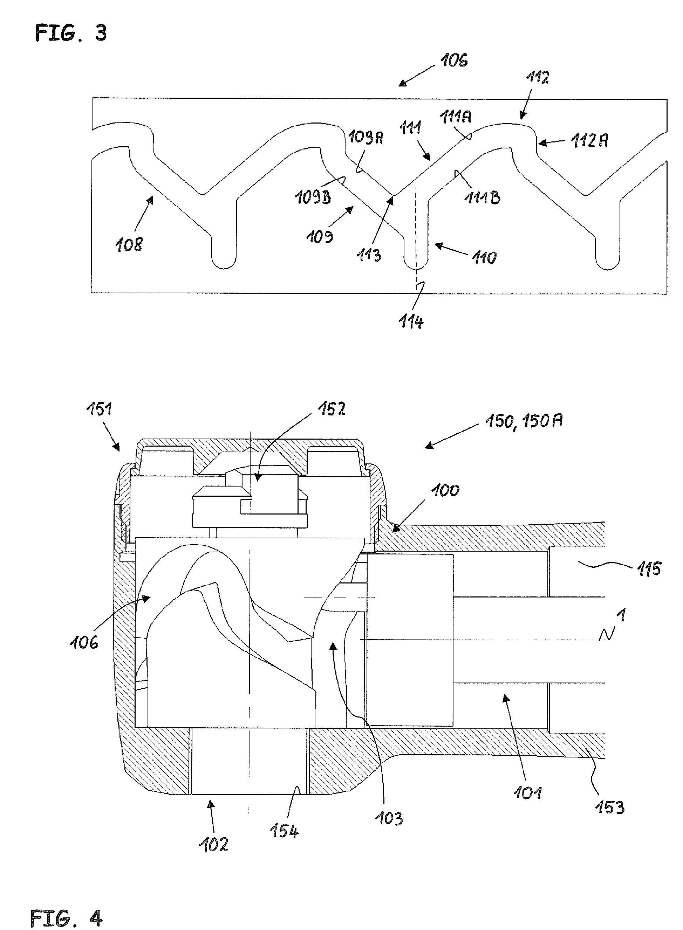

Die Figuren 4 und 7 zeigen die Antriebsvorrichtung 100; 200 oder das Exzentergetriebe 103; 203 in einer medizinischen, insbesondere dentalen oder chirurgischen, Behandlungsvorrichtung 150; 250 und / oder in einem medizinischen, insbesondere dentalen oder chirurgischen, Handgriffelement 150A; 250A. Die Behandlungsvorrichtung 150; 250 oder das Handgriffelement 150A; 250A umfassen vorzugsweise ein Winkelstück mit einem Kopfabschnitt 151; 251 und einem daran anschließenden Griffabschnitt 153; 253. In dem Kopfabschnitt 151; 251 sind insbesondere die Abtriebswelle 102; 202, in der zumindest ein Teil einer Werkzeughaltevorrichtung 152; 252 angeordnet ist, und zumindest ein Teil des Exzentergetriebes 103; 203, insbesondere die Aufnahmeeinheit 106; 206, angeordnet. Eine Werkzeugaufnahmeöffnung 154; 254 ist seitlich an dem Kopfabschnitt 151; 251 vorgesehen. Die Abtriebswelle 102; 202 und / oder die Aufnahmeeinheit 106; 206 ist / sind derart in dem Kopfabschnitt 151; 251 aufgenommen, dass die zweite Drehachse 2 gewinkelt zur ersten Drehachse 1 angeordnet ist.

Im Folgenden werden weitere Merkmale der Antriebsvorrichtung 100 beschrieben (siehe Figuren 1 - 4): Wie aus den Figuren 1, 2 zu erkennen ist, umfasst die Antriebsvorrichtung 100 oder das Exzentergetriebe 103 einen einzigen Exzenterstift 104.

Die Aufnahmeeinheit 106 ist insbesondere durch einen zylindrischen Körper 106A gebildet, in dem eine geschlossene Bahn oder Führung 108 für den Exzenterstift 104 vorgesehen ist. Die geschlossene Bahn oder Führung 108 ist insbesondere an der Außen- oder Mantelfläche des zylindrischen Körpers 106A vorgesehen. Der zylindrische Körper 106A wird mittig oder entlang seiner Längsachse 2 von der Abtriebswelle 102 durchsetzt.

Die Bahn oder Führung 108 ist insbesondere derart in sich geschlossen, dass sie einen gewellten oder axial (in Bezug auf die zweite Drehachse 2) auf- und absteigenden Kreis bildet, in dessen Mitte die zweite Drehachse 2 und / oder die Abtriebswelle 102 angeordnet sind.

Ein beispielhafter Verlauf einer Nut oder Bahn 108 ist in der Figur 3 abgebildet, wobei zwecks besserem Verständnis der Verlauf der Nut oder Bahn 108 oder die Mantelfläche des zylindrische Körpers 106A zweidimensional dargestellt sind: Die Aufnahmeeinheit 106 oder die Bahn 108 weisen mehrere gewinkelt zueinander angeordnete Abschnitte 109 - 112 auf. Vorzugsweise formen die Abschnitte 109 - 112 ein im Wesentlichen Y-förmiges Gebilde, so dass in der Figur 3 drei Y-förmige Gebilde zu erkennen sind, die an den Enden ihrer Arme miteinander verbunden sind.

Vorzugsweise weist die Aufnahmeeinheit 106 oder die Bahn 108 für den Exzenterstift 104 zumindest einen ersten Abschnitt 109, 110, 111 auf, der derart geformt ist, dass er eine Drehung der Abtriebswelle 102 in eine erste Drehrichtung, insbesondere in die Vorzugs- oder Arbeitsrichtung, bewirkt. Des Weiteren umfasst die Aufnahmeeinheit 106 oder die Bahn 108 zumindest einen zweiten Abschnitt 112, der derart geformt ist, dass er eine Drehung der Abtriebswelle 102 in die zweite Drehrichtung bewirkt, insbesondere in eine der Vorzugsrichtung im Wesentlichen entgegengesetzte Richtung oder Rückstellrichtung.

Der zweite Abschnitt 112 schließt vorzugsweise an zumindest einen der ersten Abschnitte 109 - 111, insbesondere an zumindest ein Ende eines ersten Abschnitts 109 - 111, an oder der zweite Abschnitt 112 verbindet zwei erste Abschnitte 109 - 111 miteinander. Der zweite Abschnitt 112 ist vorzugsweise in einem Scheitelbereich oder vertikal / axial (in Bezug auf die zweite Drehachse 2) äußeren Bereich der Bahn 108 vorgesehen. Der zweite Abschnitt 112 weist vorzugsweise zumindest einen Teilabschnitt 112A auf, der im Wesentlichen parallel zur zweiten Drehachse 2 der Abtriebswelle 102 angeordnet ist.

Vorzugsweise weist die die Aufnahmeeinheit 106 oder die Bahn 108 für den Exzenterstift 104 zumindest einen im Wesentlichen parallel zur zweiten Drehachse 2 der Abtriebswelle 102 angeordneten Abschnitt 110 auf, von dem sich insbesondere der erste Abschnitt oder Arm 109 in eine erste Richtung und ein zweite Abschnitt oder Arm 111 in eine zweite Richtung, die von der ersten Richtung unterschiedlich ist, erstrecken. Der Abschnitt 110 kann an seinem freien Ende oder an seinem von den Abschnitten 109, 111 abgewandten Ende geschlossen sein (siehe Figur 3) oder er kann offen sein und / oder eine Öffnung aufweisen (siehe Figuren 1, 2). Der Abschnitt 110 ist vorzugsweise in einem Scheitelbereich oder unteren Bereich der Bahn 108 vorgesehen, so dass insbesondere die Abschnitte 110 und 112 an gegenüberliegenden vertikalen oder axialen (in Bezug auf die zweite Drehachse 2) Endbereichen der Bahn 108 vorgesehen sind.

Vorzugsweise weisen der erste Arm 109 eine erste Kante 109A und der zweite Arm 111 eine zweite Kante 111 A auf, wobei die beiden Kanten 109A, 111 A sich in einem Kontaktpunkt 113 vereinen und wobei der Kontaktpunkt 113 von einer Mittelachse 114 des parallel zur zweiten Drehachse 2 der Abtriebswelle 102 angeordneten Abschnitts 110 beabstandet ist. Insbesondere ist der Kontaktpunkt 113 seitlich von der Mittelachse 114 angeordnet oder von der Mittelachse 114 gesehen in Richtung eines Abschnittes 109, 111 verschoben angeordnet. Durch diese Anordnung des Kontaktpunktes 113 ist insbesondere für den Exzenterstift 104 oder das Exzentergetriebe 103 eine bevorzugte Bewegungsrichtung vorgegeben.

Die beiden Kanten 109A, 111 A sowie jeweils eine weitere Kante oder Unterkante 109B, 111 B begrenzen die Abschnitte oder Arme 109, 111, wobei die Kanten 109A, 111 A insbesondere die Oberkanten bilden oder jene Kanten sind, die von dem Abschnitt 110 weiter entfernt sind als die Kanten 109B, 111 B.

Die Winkel zwischen den Abschnitten 109, 110, 111 sind vorzugsweise jeweils größer als 90°: Der Winkel zwischen dem Abschnitt 110 und dem Abschnitt 109 oder 111 ist insbesondere größer als 125°, der Winkel zwischen dem Abschnitt 109 und dem Abschnitt 111 beträgt insbesondere in etwa 95° - 110°.

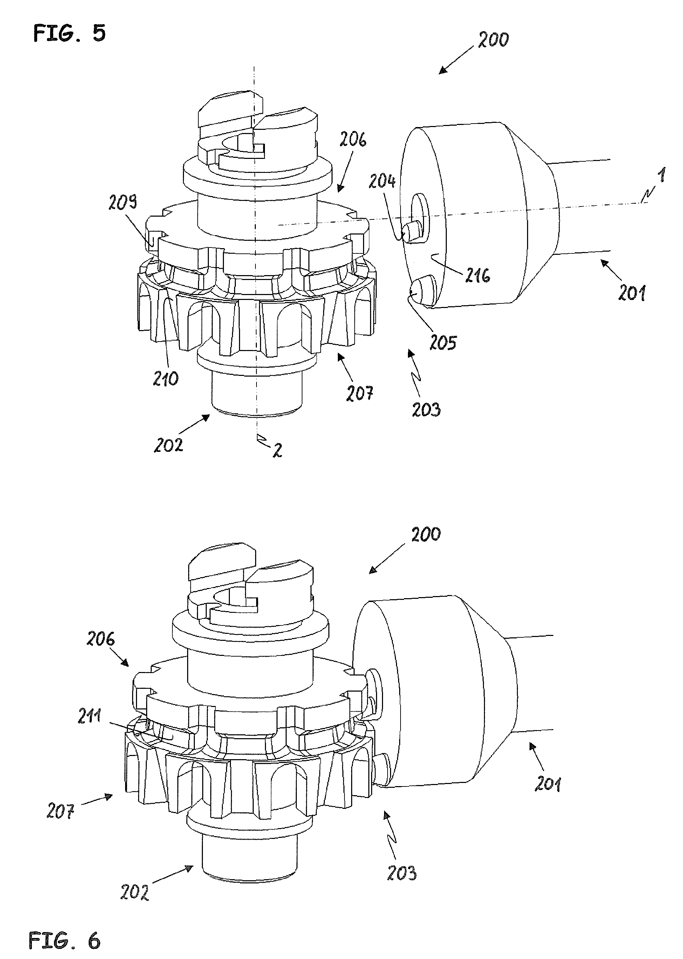

Im Folgenden werden weitere Merkmale der Antriebsvorrichtung 200 beschrieben (siehe Figuren 5 - 7): Die Antriebsvorrichtung 200 oder das Exzentergetriebe 203 weisen mehrere, zum Beispiel zwei, Exzenterstifte 204, 205 auf. Vorzugsweise ist dem ersten Exzenterstift 204 eine erste Aufnahmeeinheit 206 dem zweiten Exzenterstift 205 eine zweite Aufnahmeeinheit 207 zugeordnet, wobei dem entsprechend der erste Exzenterstift 204 ausgebildet ist, in die erste Aufnahmeeinheit 206 einzugreifen oder mit dieser zusammenzuwirken und der zweite Exzenterstift 205 ausgebildet ist, in die zweite Aufnahmeeinheit 207 einzugreifen oder mit dieser zusammenzuwirken.

Der erste Exzenterstift 204 und der zweite Exzenterstift 205 sind unterschiedlich weit von der ersten Drehachse 1 der Antriebswelle 201 beabstandet. Vorzugsweise liegen die Exzenterstifte 204, 205 auf einer gemeinsamen Geraden, die sich rechtwinkelig von der ersten Drehachse 1 erstreckt oder diese schneidet.

Die Aufnahmeeinheiten 206, 207 umfassen jeweils eine kreisrunde Platte oder Scheibe, an deren Außen- oder Umfangsfläche jeweils mehrere Nuten 209, 201 vorgesehen sind. Die Aufnahmeeinheiten 206, 207 umgeben die Abtriebswelle 202, insbesondere kreisförmig, und / oder sie sind konzentrisch zur zweiten Drehachse 2 angeordnet. Vorzugsweise sind die erste Aufnahmeeinheit 206 und die zweite Aufnahmeeinheit 207 durch einen Einstich 211 voneinander getrennt.

Vorzugsweise sind die ersten Nuten 209 und die zweiten Nuten 210 derart versetzt zueinander angeordnet, dass abwechselnd eine erste Nut 209 und eine zweite Nut 210 vorgesehen ist. Vorzugsweise erstrecken sich die Nuten 209, 210 entlang der zweiten Drehachse 2 und / oder im Wesentlichen parallel zur zweiten Drehachse 2. Vorzugsweise sind zumindest die Böden einiger Nuten 209, 210 in Richtung der zweiten Drehachse 2 geneigt. Vorzugsweise umgeben die ersten Nuten 209 und die zweiten Nuten 210 die zweite Drehachse 2 in einer kreisförmigen Anordnung.

Das Exzentergetriebe 203 ist derart ausgebildet, dass bei Betrieb abwechselnd der erste Exzenterstift 204 in die erste Aufnahmeeinheit 206 und der zweite Exzenterstift 205 in die zweite Aufnahmeeinheit 207 eingreift. Alternativ oder zusätzlich ist das Exzentergetriebe 203 derart ausgebildet, dass es bei Betrieb, wenn ein Exzenterstift 204, 205 derart in die ihm zugeordnete Aufnahmeeinheit 206, 207 eingreift, dass er eine Drehung der Abtriebswelle 202 bewirkt, der andere Exzenterstift 204, 205 eine Position einnimmt, in der er keine Drehung der Abtriebswelle 202 bewirkt.

## Patentansprüche

1. Antriebsvorrichtung (100; 200) für ein medizinisches, insbesondere dentales oder chirurgisches, Werkzeug, die ausgebildet ist, das Werkzeug in eine oszillierende Rotationsbewegung zu versetzen, wobei die oszillierende Rotationsbewegung eine abwechselnde Rotation des Werkzeugs in eine erste Drehrichtung um einen ersten Drehwinkel und in eine zweite Drehrichtung, welche der ersten Drehrichtung im Wesentlichen entgegengesetzt ist, um einen zweiten Drehwinkel umfasst, wobei der erste und der zweite Drehwinkel unterschiedliche Beträge aufweisen, so dass das Werkzeug bei mehrfachem, sequentiellen Rotieren in die erste und in die zweite Drehrichtung in Summe eine Rotationsbewegung in eine Vorzugsrichtung erfährt, wobei die Antriebsvorrichtung (100; 200) umfasst: Eine um eine erste Drehachse (1) rotierende Antriebswelle (101; 201), die zur Übertragung einer unidirektionalen Rotationsbewegung ausgebildet ist, eine in die oszillierende Rotationsbewegung versetzbare und um eine zweite Drehachse (2) rotierbare Abtriebswelle (102; 202) und ein Exzentergetriebe (103; 203), das die Antriebswelle (101; 201) und die Abtriebswelle (102; 202) verbindet, **dadurch gekennzeichnet, dass** das Exzentergetriebe (103; 203) zumindest einen Exzenterstift (104; 204, 205) und zumindest eine Aufnahmeeinheit (106; 206, 207) für den zumindest einen Exzenterstift (104; 204, 205) umfasst, die derart zusammenwirken, dass die Abtriebswelle (102; 202) und ein mit der Abtriebswelle (102; 202) verbindbares Werkzeug in die oszillierende Rotationsbewegung versetzbar sind, wobei das Exzentergetriebe (103; 203) aus Metall und / oder Kunststoff gebildet ist und derart ausgebildet ist, dass der Exzenterstift (104; 204, 205) sich in einer Nut (209, 210) oder Führung oder Bahn (108) der Aufnahmeeinheit (106; 206, 207) bewegt, wobei aufgrund der Ausgestaltung oder Form der Nut (209, 210) oder Führung oder Bahn (108) die Abtriebswelle (102; 202) in eine oszillierende Rotationsbewegung versetzbar ist.

2. Antriebsvorrichtung (100; 200) nach Anspruch 1, **dadurch gekennzeichnet, dass** die Aufnahmeeinheit (106) für den Exzenterstift (104) eine geschlossene, die zweite Drehachse (2) umgebende Bahn (108) aufweist.

3. Antriebsvorrichtung (100; 200) nach einem der vorstehenden Ansprüche, **dadurch gekennzeichnet, dass**
die Aufnahmeeinheit (106) für den Exzenterstift (104) mehrere gewinkelt zueinander angeordnete Abschnitte (109 - 112) aufweist.

4. Antriebsvorrichtung (100; 200) nach einem der vorstehenden Ansprüche, **dadurch gekennzeichnet, dass**
die Aufnahmeeinheit (106) für den Exzenterstift (104) zumindest einen ersten Abschnitt (109, 110, 111), der derart geformt ist, dass er eine Drehung der Abtriebswelle (102) in die erste Drehrichtung bewirkt, und zumindest einen zweiten Abschnitt (112), der derart geformt ist, dass er eine Drehung der Abtriebswelle (102) in die zweite Drehrichtung bewirkt, aufweist.

5. Antriebsvorrichtung (100; 200) nach einem der vorstehenden Ansprüche, **dadurch gekennzeichnet, dass**
die Aufnahmeeinheit (106) für den Exzenterstift (104) zumindest einen im Wesentlichen parallel zur zweiten Drehachse (2) der Abtriebswelle (102) angeordneten Abschnitt (110) aufweist, von dem sich ein erster Arm (109) in eine erste Richtung und ein zweiter Arm (111) in eine zweite Richtung, die von der ersten Richtung unterschiedlich ist, erstrecken.

6. Antriebsvorrichtung (100; 200) nach einem der vorstehenden Ansprüche, **dadurch gekennzeichnet, dass**
die Nut (209, 210) oder Führung oder Bahn (108) direkt oder einteilig mit der Aufnahmeeinheit (106; 206, 207) verbunden ist.

7. Antriebsvorrichtung (200) nach Anspruch 1, **dadurch gekennzeichnet, dass**
das Exzentergetriebe (203) einen ersten Exzenterstift (204, 205), dem eine erste Aufnahmeeinheit (206, 207) zugeordnet ist, und einen zweiten Exzenterstift (204, 205), dem eine zweite Aufnahmeeinheit (206, 207) zugeordnet ist, aufweist.

8. Antriebsvorrichtung (200) nach Anspruch 7, **dadurch gekennzeichnet, dass**
der erste Exzenterstift (204, 205) und der zweite Exzenterstift (204, 205) unterschiedlich weit von der ersten Drehachse (1) der Antriebswelle (201) beabstandet sind.

9. Antriebsvorrichtung (200) nach einem der Ansprüche 7 oder 8, **dadurch gekennzeichnet, dass**
die erste Aufnahmeeinheit (206, 207) und die zweite Aufnahmeeinheit (206, 207), zum Beispiel durch einen Einstich (211), voneinander getrennt sind.

10. Antriebsvorrichtung (200) nach einem der Ansprüche 7 - 9, **dadurch gekennzeichnet, dass**
die erste Aufnahmeeinheit (206, 207) mehrere erste Nuten (209, 210) und die zweite Aufnahmeeinheit (206, 207) mehrere zweite Nuten (209, 210) aufweist, wobei die ersten Nuten und die zweiten Nuten (209, 210) derart versetzt zueinander angeordnet sind, dass abwechselnd eine erste Nut und eine zweite Nut (209, 210) vorgesehen ist.

11. Antriebsvorrichtung (100; 200) nach einem der Ansprüche 1 - 10, **dadurch gekennzeichnet, dass**
die erste Aufnahmeeinheit (106; 206, 207) und / oder die zweite Aufnahmeeinheit (206, 207) die zweite Drehachse (2) der Abtriebswelle (102; 202) im Wesentlichen kreisförmig umgeben und / oder dass die ersten Nuten (209, 210) der ersten Aufnahmeeinheit (206, 207) und die zweiten Nuten (209, 210) der zweiten Aufnahmeeinheit (206, 207) die zweite Drehachse (2) in einer kreisförmigen Anordnung umgeben.

12. Antriebsvorrichtung (200) nach einem der Ansprüche 7 - 11, **dadurch gekennzeichnet, dass**
das Exzentergetriebe (203) derart ausgebildet ist, dass abwechselnd der erste Exzenterstift (204, 205) in die erste Aufnahmeeinheit (206, 207) und der zweite Exzenterstift (204, 205) in die zweite Aufnahmeeinheit (206, 207) eingreift oder das Exzentergetriebe (203) derart ausgebildet ist, dass während ein Exzenterstift (204, 205) derart in die ihm zugeordnete Aufnahmeeinheit (206, 207) eingreift, dass er eine Drehung der Abtriebswelle (202) bewirkt, der andere Exzenterstift (204, 205) eine Position einnimmt, in der er keine Drehung der Abtriebswelle (202) bewirkt.

13. Antriebsvorrichtung (200) nach einem der Ansprüche 1 - 12, **dadurch gekennzeichnet, dass**
das Exzentergetriebe (103; 203) ausgebildet ist, alleine oder ohne einem weiteren Getriebe die von der Antriebswelle (102, 202) zur Verfügung gestellte unidirektionalen Rotationsbewegung in die oszillierende Rotationsbewegung zu wandeln.

14. Medizinische, insbesondere dentale oder chirurgische, Behandlungsvorrichtung, (150; 250) vorzugsweise medizinisches, insbesondere dentales oder chirurgisches, Handgriffelement (150A; 250A), welche(s) insbesondere für endodontische Behandlungen ausgebildet ist, **gekennzeichnet durch**
eine Antriebsvorrichtung (100; 200) nach einem der vorstehenden Ansprüche.

15. Medizinische, insbesondere dentale oder chirurgische, Behandlungsvorrichtung (150; 250), vorzugsweise medizinisches, insbesondere dentales oder chirurgisches, Handgriffelement (150A; 250A) nach Anspruch 14, **dadurch gekennzeichnet, dass** die Behandlungsvorrichtung (150; 250) oder das Handgriffelement (150A; 250A) einen Kopfabschnitt (151; 251) mit einer Werkzeughaltevorrichtung (152; 252) für das Werkzeug aufweist, wobei zumindest ein Teil der Werkzeughaltevorrichtung (152; 252) in der Abtriebswelle (102; 202) angeordnet ist.

## Claims

1. A drive device (100; 200) for a medical, in particular a dental or surgical tool, that is designed to set the tool into an oscillating rotational motion, wherein the oscillating rotational motion comprises an alternating rotation of the tool by a first angle of rotation in a first rotational direction and by a second angle of rotation in a second rotational direction, substantially opposed to the first rotational direction, wherein the first and second angles of rotation have different values, so that during multiple sequential rotations in the first and second rotational directions the tool cumulatively experiences a rotational movement in a preferred direction, wherein the drive device (100; 200) comprises: A drive shaft (101; 201) rotating about a first rotational axis (1) and designed to transmit a unidirectional rotational motion, an output shaft (102; 202) that can be set into the oscillating rotational motion and that can rotate about a second rotational axis (2), and an eccentric gear unit (103; 203) that couples the drive shaft (101; 201) with the output shaft (102; 202), **characterized in that**
the eccentric gear unit (103; 203) comprises at least one eccentric pin (104; 204, 205) and at least receiving unit (106; 206, 207) for the at least one eccentric pin (104; 204, 205) which work together in such a way that the output shaft (102; 202) and a tool that can be connected to the output shaft (102; 202) can be set into the oscillating rotational motion, wherein the eccentric gear unit (103; 203) is made from metal and/or plastic and is designed such, that that the eccentric pin (104; 204, 205) moves in a groove (209; 210) or guide or track (108) of the receiving unit (106; 206, 207), wherein, due to the configuration or form of the groove (209, 210) or guide or track (108) the output shaft (102; 202) can be put into an oscillating rotational motion.

2. The drive device (100; 200) according to claim 1, **characterized in that** receiving unit (106) for the eccentric pin (104) comprises a self-contained track (108) surrounding the second rotational axis (2).

3. The drive device (100; 200) according to any one of preceding claims, **characterized in that**
the receiving unit (106) for the eccentric pin (104) comprises a plurality of sections (109 - 112) arranged at angles to one another.

4. The drive device (100; 200) according to any one of preceding claims, **characterized in that**
the receiving unit (106) for the eccentric pin (104) comprises at least a first section (109, 110, 111) that is formed in such a way that it causes a rotation of the output shaft (102) in the first rotational direction, and at least a second section (112) that is formed in such a way that it causes a rotation of the output shaft (102) in the second rotational direction.

5. The drive device (100; 200) according to any one of preceding claims, **characterized in that**
the receiving unit (106) for the eccentric pin (104) comprises at least one section (110) arranged essentially parallel to the second rotational axis (2) of the output shaft (102), wherein a first arm (109) and a second arm (111) extend from said at least one section (110) in a first direction and in a second direction, respectively, wherein the second direction is different from the first direction.

6. The drive device (100; 200) according to any one of preceding claims, **characterized in that**
the groove (209, 210) or guide or track (108) is directly connected to or is integrally with the receiving unit (106; 206, 207).

7. The drive device (200) according to claim 1, **characterized in that**
the eccentric gear unit (203) comprises at least a first eccentric pin (204, 205) to which a first receiving unit (206, 207) is assigned and a second eccentric pin (204, 205) to which a second receiving unit (206, 207) is assigned.

8. The drive device (200) according to claim 7, **characterized in that**
the first eccentric pin (204, 205) and the second eccentric pin (204, 205) are arranged at different distances from the first rotational axis (1) of the drive shaft (201).

9. The drive device (200) according to any one of the claims 7 or 8, **characterized in that** the first receiving unit (206, 207) and the second receiving unit (206, 207) are separated from one another, for example by a recess (211).

10. The drive device (200) according to any one of the claims 7 - 9, **characterized in that** the first receiving unit (206, 207) comprises a plurality of first grooves (209, 210) and the second receiving unit (206, 207) comprises a plurality of second grooves (209, 210), wherein the first grooves and second grooves (209, 210) are arranged offset from one another in such a way that there is alternately provided a first groove and a second groove (209, 210).

11. The drive device (100; 200) according to any one of the claims 1 - 10, **characterized in that**
the first receiving unit (106; 206, 207) and/or the second receiving unit (206, 207) surround the second rotational axis (2) of the output shaft (102; 202) substantially in a circular shape and/or the first grooves (209, 210) of the first receiving unit (106; 206, 207) and the second grooves (209, 210) of the second receiving unit (206, 207) surround the second rotational axis (2) in a circular shape.

12. The drive device (200) according to any one of the claims 7 - 11, **characterized in that** the eccentric gear unit (203) is designed in such a way that alternately the first eccentric pin (204, 205) engages with the first receiving unit (206, 207) and the second eccentric pin (204, 205) with the second receiving unit (206, 207) or the eccentric gear unit (203) is designed in such a way that while one eccentric pin (204, 205) engages with its receiving unit (206, 207) in such a way that it causes a rotation of the output shaft (202), the other eccentric pin (204, 205) takes up a position in which it does not cause the output shaft (202) to rotate.

13. The drive device (200) according to any one of the claims 1 - 12, **characterized in that** the eccentric gear unit (103; 203) is designed in such a way that it can convert the unidirectional rotational motion provided by the drive shaft (102; 202) into the oscillating rotational motion alone or without another gear.

14. A medical, in particular a dental or surgical, treatment device (150; 250), preferably a medical, in particular a dental or surgical, hand grip element (150A; 250A), in particular designed for endodontic treatments, **characterized by**
a drive device (100; 200) according to any one of preceding claims.

15. The medical, in particular a dental or surgical, treatment device (150; 250), preferably the medical, in particular a dental or surgical, hand grip element (150A; 250A) according to claim 14, **characterized in that**
the treatment device (150; 250) or the hand grip element (150A; 250A) comprises a head section (151; 251) with a tool-holding device (152; 252) for the tool, wherein at least a portion of the tool-holding device (152; 252) is located in the output shaft (102; 202).

## Revendications

1. Dispositif d'entraînement (100; 200) pour un outil médical, en particulier dentaire ou chirurgical, lequel est réalisé pour imprimer à l'outil un mouvement de rotation oscillant, dans lequel le mouvement de rotation oscillant comprend une rotation changeante de l'outil dans une première direction de rotation autour d'un premier angle de rotation et dans une deuxième direction de rotation, laquelle est sensiblement opposée à la première direction de rotation, autour d'un deuxième angle de rotation, dans lequel le premier angle de rotation et le deuxième angle de rotation présentent des degrés différents de sorte que l'outil, en cas d'une rotation séquentielle multiple dans la première et la deuxième direction de rotation, se voit imprimer au total un mouvement de rotation dans une direction préférentielle, dans lequel le dispositif d'entraînement (100; 200) comprend: un arbre d'entraînement (101; 201) tournant autour d'un premier axe de rotation (1), lequel est réalisé pour la transmission d'un mouvement de rotation unidirectionnel, un arbre mené (102; 202) auquel on peut imprimer le mouvement de rotation oscillant et pouvant tourner autour d'un deuxième axe de rotation (2), et un engrenage à excentrique (103; 203) qui relie l'arbre d'entraînement (101; 201) et l'arbre mené(102; 202), **caractérisé en ce que**
l'engrenage à excentrique (103; 203) comprend au moins une tige d'excentrique (104; 204; 205) et au moins une unité de réception (106; 206, 207) pour l'au moins une tige d'excentrique (104; 204, 205) lesquelles coopèrent de manière à pouvoir imprimer à l'arbre mené (102; 202) et à un outil pouvant être relié à l'arbre mené (102; 202) le mouvement de rotation oscillant, dans lequel l'engrenage à excentrique (103; 203) est réalisé en métal et/ou plastique et est réalisé de manière à ce que la tige d'excentrique (104; 204, 205) se déplace dans une rainure (209, 210) ou un guidage ou une glissière (108) de l'unité de réception (106; 206, 207), dans lequel, en raison de la configuration ou forme de la rainure (209, 210) ou du guidage ou de la glissière (108), on peut imprimer à l'arbre mené (102; 202) un mouvement de rotation oscillant.

2. Dispositif d'entraînement (100; 200) selon la revendication 1, **caractérisé en ce que** l'unité de réception (106) pour la tige d'excentrique (104) présente une glissière (108) fermée entourant le deuxième axe de rotation (2).

3. Dispositif d'entraînement (100; 200) selon l'une des revendications précédentes, **caractérisé en ce que**
l'unité de réception (106) pour la tige d'excentrique (104) présente plusieurs parties (109-112) disposées de manière angulaire les unes par rapport aux autres.

4. Dispositif d'entraînement (100; 200) selon l'une des revendications précédentes, **caractérisé en ce que**
l'unité de réception (106) pour la tige d'excentrique (104) présente au moins une première partie (109, 110, 111) qui est formée d'une manière telle, qu'elle provoque une rotation de l'arbre mené (102) dans la première direction de rotation, et au moins une deuxième partie (112) qui est formée d'une manière telle, qu'elle provoque une rotation de l'arbre mené (102) dans la deuxième direction de rotation.

5. Dispositif d'entraînement (100; 200) selon l'une des revendications précédentes, **caractérisé en ce que**
l'unité de réception (106) pour la tige d'excentrique (104) présente au moins une partie (110) disposée sensiblement parallèlement au deuxième axe de rotation (2) de l'arbre mené (102), à partir de laquelle un premier bras (109) s'étend dans une première direction et un deuxième bras (111) s'étend dans une deuxième direction qui est différente de la première direction.

6. Dispositif d'entraînement (100; 200) selon l'une des revendications précédentes, **caractérisé en ce que**
la rainure (209, 210) ou le guidage ou la glissière (108) est relié(e) directement à l'unité de réception (106; 206, 207) ou d'une seule pièce avec celle-ci.

7. Dispositif d'entraînement (200) selon la revendication 1, **caractérisé en ce que**
l'engrenage à excentrique (203) présente une première tige d'excentrique (204, 205) à laquelle est associée une première unité de réception (206, 207), et une deuxième tige d'excentrique (204, 205) à laquelle une deuxième unité de réception (206, 207) est associée.

8. Dispositif d'entraînement (200) selon la revendication 7, **caractérisé en ce que**
la première tige d'excentrique (204, 205) et la deuxième tige d'excentrique (204, 205) sont espacées à une distance différente du premier axe de rotation (1) de l'arbre d'entraînement (201).

9. Dispositif d'entraînement (200) selon l'une des revendications 7 ou 8, **caractérisé en ce que**
la première unité de réception (206, 207) et la deuxième unité de réception (206, 207) sont séparées l'une de l'autre, par exemple grâce à une entaille (211).

10. Dispositif d'entraînement (200) selon l'une des revendications 7 - 9, **caractérisé en ce que**
la première unité de réception (206, 207) présente plusieurs premières rainures (209, 210) et la deuxième unité de réception (206, 207) présente plusieurs deuxièmes rainures (209, 210), dans lequel les premières rainures et les deuxièmes rainures (209, 210) sont disposées de manière décalée les unes par rapport aux autres d'une manière telle, que l'on prévoit tour à tour une première rainure et une deuxième rainure (209, 210).

11. Dispositif d'entraînement (100; 200) selon l'une des revendications 1 - 10, **caractérisé en ce que**
la première unité de réception (106; 206, 207) et/ou la deuxième unité de réception (206, 207) entourent le deuxième axe de rotation (2) de l'arbre mené (102; 202) sensiblement de façon circulaire et/ou **en ce que** les premières rainures (209, 210) de la première unité de réception (206, 207) et les deuxièmes rainures (209, 210) de la deuxième unité de réception (206, 207) entourent le deuxième axe de rotation (2) selon un agencement circulaire.

12. Dispositif d'entraînement (200) selon l'une des revendications 7 - 11, **caractérisé en ce que**
l'engrenage à excentrique (203) est réalisé d'une manière telle, que tour à tour la première tige d'excentrique (204, 205) se met en prise dans la première unité de réception (206, 207) et la deuxième tige d'excentrique (204, 205) dans la deuxième unité de réception (206, 207), ou bien **en ce que** l'engrenage à excentrique (203) est réalisé d'une manière telle, que pendant qu'une tige d'excentrique (204, 205) se met en prise dans l'unité de réception (206, 207) qui lui est associée de sorte à provoquer une rotation de l'arbre mené (202), l'autre tige d'excentrique (204, 205) adopte une position dans laquelle elle ne provoque pas de rotation de l'arbre mené (202).

13. Dispositif d'entraînement (200) selon l'une des revendications 1 - 12, **caractérisé en ce que**
l'engrenage à excentrique (103; 203) est réalisé pour convertir, seul ou sans un autre engrenage, le mouvement de rotation unidirectionnel mis à disposition par l'arbre d'entraînement (102, 202) en le mouvement de rotation oscillant.

14. Dispositif de traitement médical, en particulier dentaire ou chirurgical (150; 250), de préférence un élément de poignée médical, en particulier dentaire ou chirurgical (150A; 250A) qui est en particulier réalisé pour des traitements endodontiques, **caractérisé par** un dispositif d'entraînement (100; 200) selon l'une des revendications précédentes.

15. Dispositif de traitement médical, en particulier dentaire ou chirurgical (150; 250), de préférence un élément de poignée médical, en particulier dentaire ou chirurgical (150A; 250A) selon la revendication 14, **caractérisé en ce que**
le dispositif de traitement (150; 250) ou l'élément de poignée (150A; 250A) présente une partie de tête (151; 251) avec un dispositif porte-outil (152; 252) pour l'outil, dans lequel au moins une partie du dispositif porte-outil (152; 252) est disposée dans l'arbre mené (102; 202).
